(19) Europäisches Patentamt
European Patent Office
Office européen des brevets

(11) EP 1 607 447 A1

(12) **EUROPEAN PATENT APPLICATION**

(43) Date of publication:
**21.12.2005 Bulletin 2005/51**

(51) Int Cl.⁷: **C09B 67/00**, B41M 5/26, D06P 1/00

(21) Application number: **05010663.2**

(22) Date of filing: **17.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **14.06.2004 US 867518**

(71) Applicant: **Hewlett-Packard Development Company, L.P.**
**Houston, TX 77070 (US)**

(72) Inventors:
- **Gore, Makarand P.**
  **Corvallis OR 97330 (US)**
- **Smouse, Evan P.**
  **Corvallis OR 97330 (US)**

(74) Representative: **Schoppe, Fritz et al**
**Patentanwälte**
**Schoppe, Zimmermann, Stöckeler & Zinkler**
**Postfach 246**
**82043 Pullach bei München (DE)**

(54) **Methods and compositions for dyeing a substrate**

(57) Methods and compositions used to form an image on a substrate with a colorant solution are described. A method of forming an image on a substrate includes applying the colorant solution comprising a reactive colorant and a radiation absorber to the substrate. A composition for dying a substrate includes a radiation absorber and a reactive colorant capable of producing a color on the substrate when exposed to radiation. A system utilizing the colorant solution is also disclosed.

EP 1 607 447 A1

## Description

### FIELD OF THE INVENTION

The present invention relates generally to dying a substrate, and more particularly, to methods and compositions used to form an image on a substrate with a reactive colorant.

### BACKGROUND

In the fabric printing industry, fabrics are typically colored with coloring agents, such as dyes or pigments, using a screen printing technology. Most large-scale fabric printing operations employ rotary screen printing technologies that utilize patterns incorporated into fine metal screens that are shaped into cylindrical forms. The coloring agents, often in a fluid paste form, are pumped through tubing into the interior of fine cylindrical metal screens and are subsequently transferred to the fabric through the patterned pathways in the fine metal screens by a squeegee that presses the paste through the screens and onto the fabric.

The rotary screen printer must be shut down to clean the various color pastes from the tubing and screens. This cleanup process is time intensive and environmentally unfriendly because it produces a large amount of effluent stream during the cleanup process. In addition to cleaning the rotary screen printer, a different screen must be inserted, aligned and adjusted into the printer to print a different pattern on the fabric.

To remedy the need for printing processes available on a smaller than industrial scale, digital ink-jet printing processes on fabrics have been developed. As known to those of ordinary skill in the art, some digital printers utilize minute droplets of ink colorant that are ejected from nozzles of the ink-jet printer and onto a target surface, such as, for example, paper or fabric. In order to produce an image or pattern with the desired print quality on the fabric, special pre- and post-treatment processes are employed.

The pre- and post- printing processes are used to deposit an ink receptive layer, and then to condition the fabric and the ink receptive layer for optimal print quality. Finally, the colorants require a fixing process (post processing) that physically or chemically fixes the colorants to the fabric fibers. The pre-printing conditioning steps are used to initially control the humidity and temperature of the fabric to provide an optional ink reception state for the fabric, and the post-processing steps are used to "fix" the ink colorant to the fabric after the ink colorant has been received by the fibers in the fabric. In addition, pre-treating the fabric with organic materials increases ink receptivity and reduces the amount of ink spread, which arises from bleeding of the printed ink along the fibers in the fabric.

Thus, the use of textiles as a substrate in a printing process presents numerous problems. Attempts to develop energy polymerizable screen printing inks for fabrics have been made, wherein some of the attempts have focused on developing inks or coatings, that, when applied to the textiles adhere firmly to the textile. In this manner, the printed pattern has color fastness, abrasion resistance and will not degrade under normal wearing or washing conditions.

Although ink-jet printing on fabrics does exist, image distortion on the printed fabric is a constant challenge. To avoid the image distortion, the ink-jet system must address issues including tension control of the fabric, conditioning of the fabric and motion of the fabric during the printing process must all addressed.

### SUMMARY OF THE INVENTION

Methods and compositions for dying a substrate are described. The methods and compositions of the present invention include a fast, reliable and inexpensive "ink-less" method for digitally addressing image formation on a substrate.

In one embodiment, a method of forming an image on a substrate includes applying a colorant solution comprising a reactive colorant and a radiation absorber to the substrate. The method further includes exposing at least a portion of the colorant solution of the substrate to radiation, thus causing the reactive colorant to form a visible dye.

In another embodiment, a composition for dying a substrate includes a radiation absorber and a reactive colorant capable of producing a color on the substrate when exposed to radiation. In an additional embodiment, a composition for dying a substrate includes a radiation absorber and means for producing a color on the substrate when exposed to radiation.

In yet a further embodiment, a substrate for receiving an image includes a colorant solution coating at least a portion of the substrate. The colorant solution comprises means for absorbing radiation and a reactive colorant capable of producing a color on the substrate when exposed to radiation.

A system for forming an image on a substrate includes a substrate for receiving the image, wherein the substrate is coated with a colorant solution comprising a reactive colorant and a radiation absorber. The system further includes a source of radiation.

DETAILED DESCRIPTION OF THE INVENTION

The present invention is directed to methods and compositions used to form an image on a substrate. One method includes applying a colorant solution comprising a reactive colorant and a radiation absorber to a substrate, and exposing a portion of the substrate to radiation, thus causing the reactive colorant to produce a color. In other embodiments, a developer may optionally be added to the colorant solution in order to promote color formation.

As used herein, the term "radiation absorber" will be used to refer to an electromagnetic radiation sensitive agent that can generate heat, cause a reduction reaction, or otherwise transfer energy to surrounding molecules by contact upon exposure to a predetermined frequency of electromagnetic radiation. The predetermined frequency may be different from one radiation absorber to the next. When admixed with or placed in contact with a reactive colorant capable of forming a dye, the radiation absorber may be present in sufficient quantity such that upon exposure to the predetermined frequency, the radiation absorber causes the reactive colorant to form the dye.

As used herein, the term "reactive colorant" will be used to refer to a compound, that when subjected to a stimulus, will change to a dye that is visible to the naked eye under white light.

The radiation absorber acts as an energy antenna that absorbs a wavelength of light and causes the reactive colorant to form a dye. The radiation absorber may be present in the colorant solution in an amount from about 0.001% to about 10% or from about 0.5% to about 1%, wherein the amount of radiation absorber present in the colorant solution may vary based on the type of reactive colorant employed.

In one embodiment, the radiation absorber is capable of absorbing laser light having a frequency between about 600 nm and about 1200 nm. The form of energy absorbed by the radiation absorber may vary depending upon the equipment available, ambient conditions, and desired result. Examples of compounds that may be used as radiation absorbers include inorganic compounds and organic compounds. In other embodiments, the radiation absorbers may absorb other forms of energy including IR radiation, UV radiation, X-rays or visible light.

Representative examples of radiation absorbers include, but are not limited to, polymethine dyes, polymethyl indolium dyes, metal complex infrared dyes, indocyanine green, heterocyclic compounds, and combinations of any thereof.

Other radiation absorbers include, but are not limited to, IR780 (1) (Available from Aldrich 42,531-1), IR 783 (2) (Aldrich 54, 329-2), Syntec 9/1 (3), Syntec 9/3 (4), or metal complexes such as dithiolane metal complexes (5) and indoaniline metal complexes (6). The number in parenthesis following the name of the compound correlates the compound to the following chemical structures:

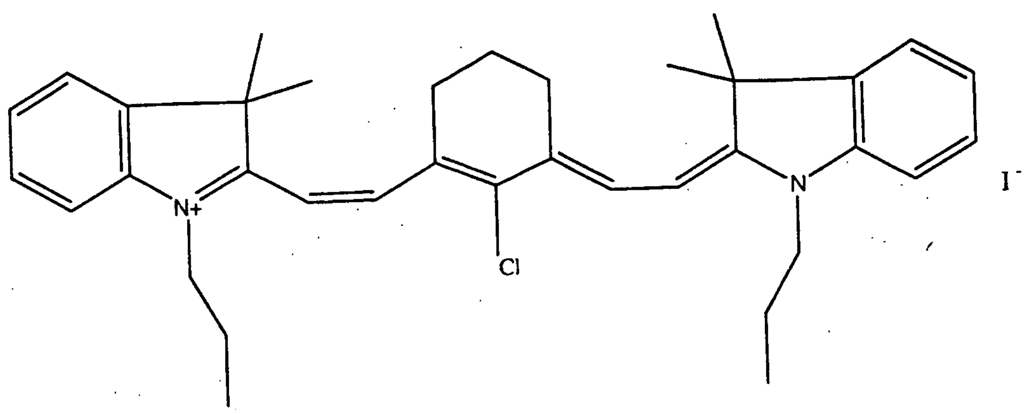

(1)

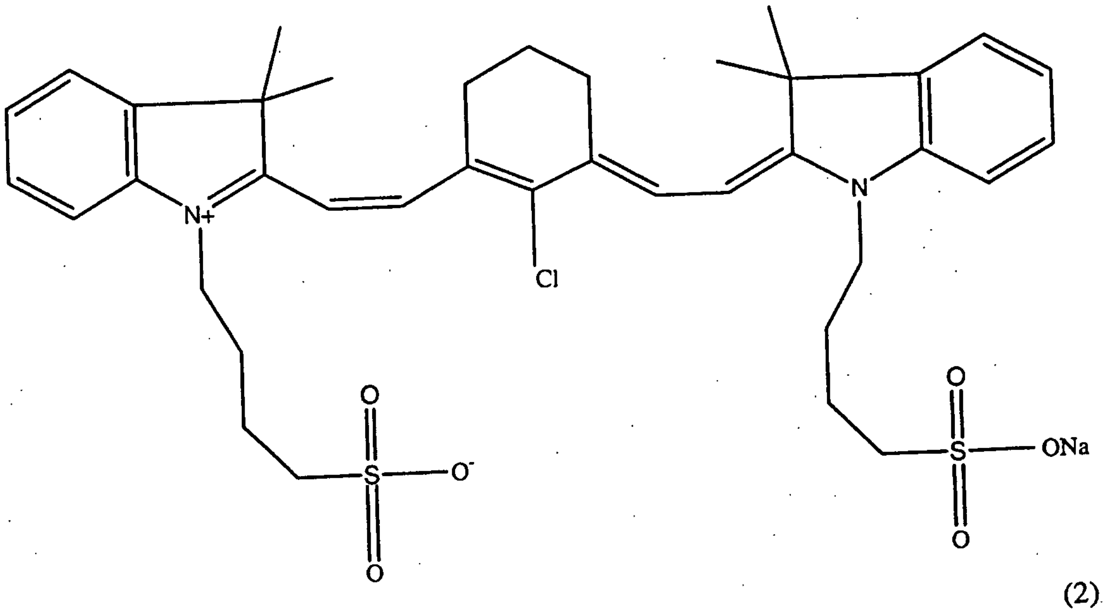

(2)

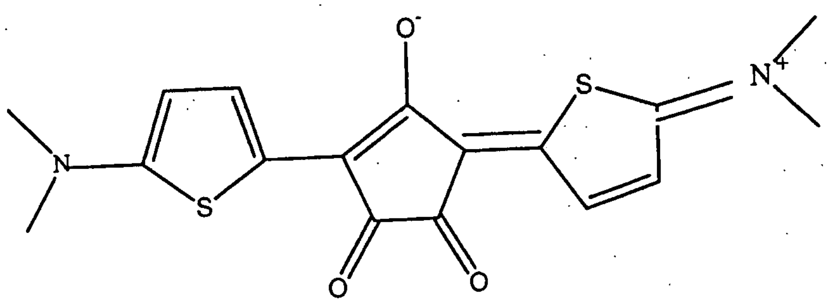

(3)

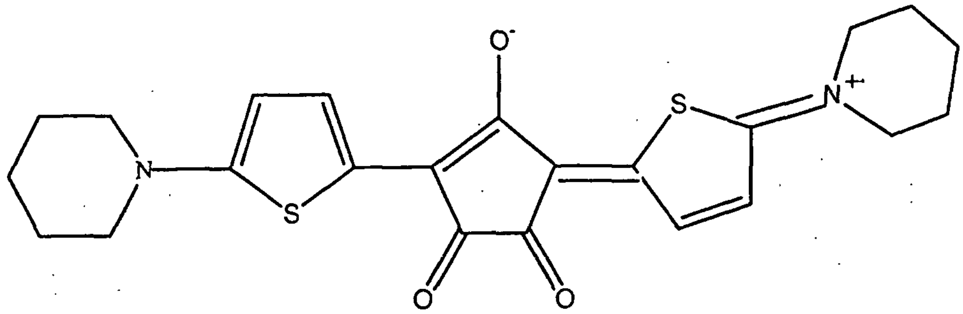

(4)

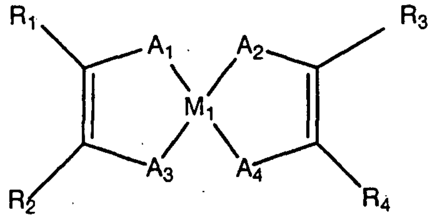

(5)

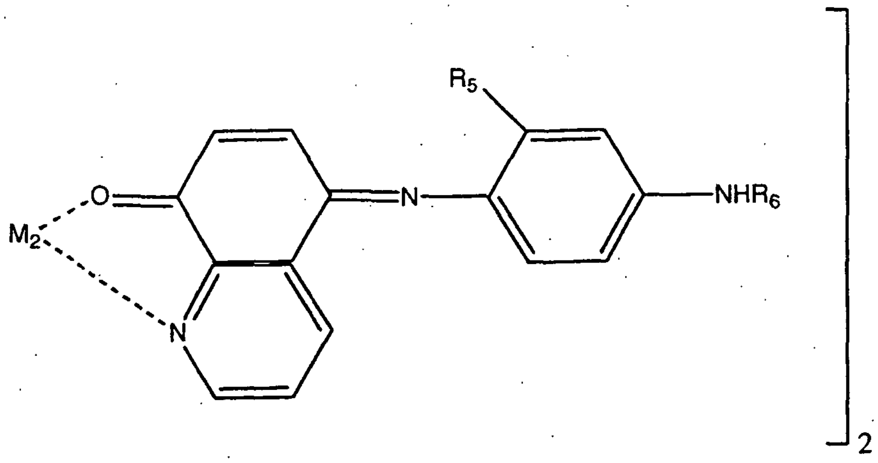

(6).

In structure (5), $M_1$ is a transition metal, $R_1$, $R_2$, $R_3$, and $R_4$ are alkyl or aryl groups with or without halo substituents, and $A_1$, $A_2$, $A_3$, and $A_4$ may be S, NH, or SE. In structure (6), $M_2$ is Ni or Cu, and $R_5$ and $R_6$ are aryl or alkyl groups with or without halo substituents.

In other embodiments, the radiation absorbers may include one or more of the following compounds: silicon 2,3 naphthalocyanine bis(trihexylsilyloxide) (7) (Aldrich 38,993-5, available from Aldrich, P.O. Box 2060, Milwaukee, WI 53201), and matrix soluble derivatives of 2,3 naphthalocyanine (8).

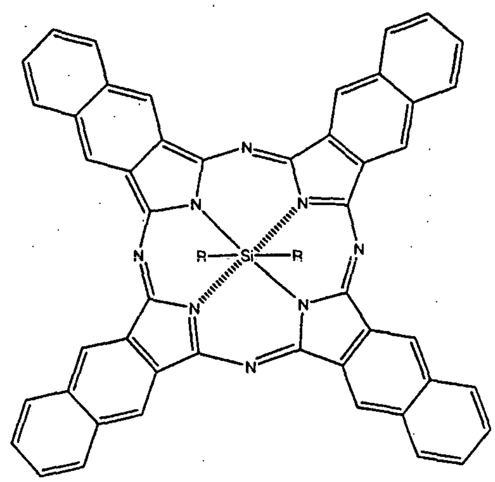

(7)

where

$$R= -O-Si-(CH_2(CH_2)_4CH_3)_3;$$

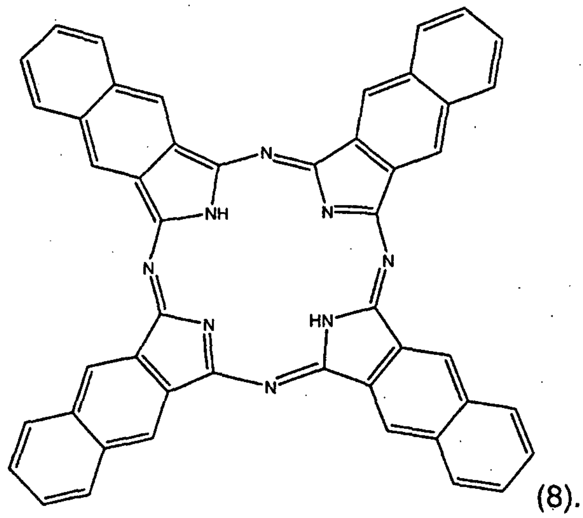

(8).

The radiation absorbers may also comprise matrix soluble derivatives of silicon phthalocyanine, described in *Rodgers, A.J. et al.*, 107 J. PHYS. CHEM. A 3503-3514 (May 8, 2003), and matrix soluble derivatives of benzophthalocyanines, described in $_{Aoudia}$, *Mohamed,* 119 J. AM. CHEM. Soc. 6029-6039 (July 2, 1997), (substructures illustrated by (9) and (10), respectively),

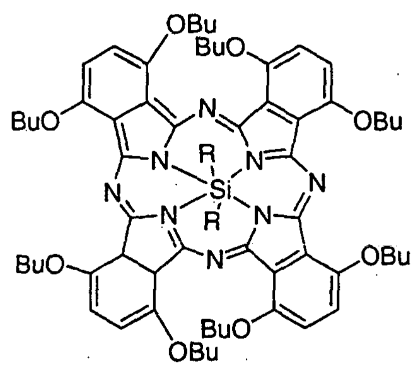

R= Trihexylsilyloxy (9)

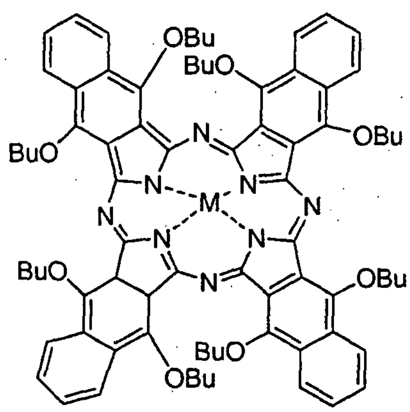

(10)

where M is a metal.

The radiation absorber may also be compounds such as those shown in (11) (as disclosed in U.S. Patent No. 6,015,896),

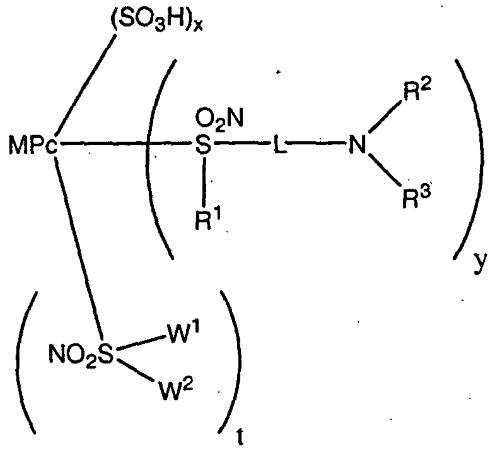

(11)

where M is a metal or hydrogen; Pc is a phthalocyanine nucleus; $R^1$, $R^2$, $W^1$, and $W^2$ are independently H or optionally substituted alkyl, aryl, or aralkyl; $R^3$ is an aminoalkyl group; L is a divalent organic linking group; x, y, and t are each independently 0.5 to 2.5; and (x+y+t) is from 3 to 4.

Other non-limiting examples of radiation absorbers include compounds such as those shown in (12) (as disclosed in U.S. Patent No. 6,025,486),

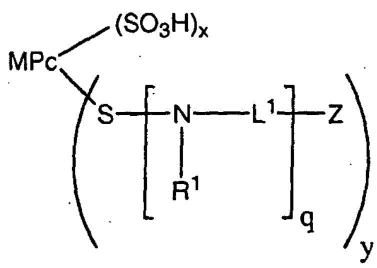

(12)

where M is a metal or hydrogen; Pc is a phthalocyanine nucleus; each $R^1$ independently is H or an optionally substituted alkyl, aryl, or aralkyl; $L^1$ independently is a divalent organic linking group; Z is an optionally substituted piperazinyl group; q is 1 or 2; x and y each independently have a value of 0.5 to 3.5; and (x+y) is from 2 to 5. The radiation absorber may also comprise 800NP (a proprietary dye available from Avecia, PO Box 42, Hexagon House, Blackley, Manchester M9 8ZS, England), a commercially available copper phthalocyanine derivative.

The reactive colorant of the colorant solution utilizes a color forming chemistry and may comprise a compound that is capable of forming a dye upon interaction with or proximity to the radiation absorber being exposed to a wavelength of light or upon reduction. Thus, conversion of the reactive colorant to a dye effectuates formation of a color after the colorant solution is exposed to light or reduction.

In one embodiment, the colorant solution comprising the reactive colorant and the radiation absorber is mixed with a liquid carrier and applied to a substrate, wherein the substrate having or coated with the colorant solution is exposed to radiation, such as light. The energy is absorbed by the radiation absorber which, in turn, causes the reactive colorant to form a dye having a color upon the application of the radiation, wherein the dye may adhere to the substrate.

In other embodiments, the colorant solution may further include a developer that aids in the formation of the dye from the reactive colorant. The colorant solution may further include an emulsifier or thickening agent which includes, but is not limited to, gelatin or tragacanth, wherein the emulsifier or thickening agent helps the colorant solution to coat the substrate.

Non-limiting examples of substrates include fabric, fibers, an optical disc, a polymeric surface, glass, ceramic, cellulose papers, plastic, acrylates, or other substrates capable of being dyed with the reactive colorant described

herein.

An image may be formed on the substrate by exposing the substrate having the colorant solution to a pattern of light. In one embodiment, the energy or radiation used to effectuate color formation is a laser that is operatively connected to a digital addressing system. In this embodiment, the digital addressing system directs a light source to produce laser energy and expose portions of the substrate and the colorant solution to the laser energy in a pre-determined pattern, such as a number, a letter, or any other image. In other embodiments, the energy may be IR radiation, UV radiation, x-rays, visible light, or any other suitable energy capable of causing the reactive colorant in combination with the radiation absorber to form a dye.

In an additional embodiment, any un-exposed colorant solution of the substrate may be removed from the substrate after exposure to the radiation by washing the substrate with water, a weak acid, an alcohol, an organic solvent, or combinations of any thereof, wherein the un-exposed colorant solution may be re-used on another substrate. In yet other embodiments, depending on the type of reactive colorant used, the dye formed from the reactive colorant may be fixed to the substrate using heat, chemical treatment or any other known method of fixing a dye to a substrate.

The colorant solution may include a number of different reactive colorants and a number of different radiation absorbers. In this manner, a first reactive colorant may be used to specifically form a first color upon exposure to a first pre-determined radiation and a second reactive colorant may be used to form a second color upon exposure to a second pre-determined radiation such that different colors may be formed on the substrate using the colorant solution. For instance, a blue color may be formed at the first radiation and a red color may be formed at the second radiation. In this manner, the substrate may have a variety of colors formed thereon to form a colored image upon exposure to different radiations.

The following examples describe various embodiments of methods and compositions for forming an image on a substrate in accordance with the present invention. The examples are merely illustrative and are not meant to limit the scope of the present invention in any way.

Example 1.

In one embodiment, the reactive colorant of the colorant solution comprises an ingrain dye such as, for example, a phthalocyanine precursor. In this embodiment, the colorless phthalocyanine precursor (e.g., iso-1-amino-3-imino-isoindolenin) changes to a colored compound in a redox reaction in the presence of a transition metal (e.g., Cu, Co or Ni salts) upon exposure of the colorant solution to radiation. In other embodiments, the phthalocyanine precursors may comprise those listed in Table 1 and include, but are not limited to: Group 1: IF3GK (Brilliant Blue), IFBK (Turquoise), IB (Blue I), and IBN (Blue); Group 2: IF3G (Brilliant Blue), IFFB (Brilliant Green), and IF2B (Brilliant Green); Group 2a: IF3GM (Brilliant Blue), IFBM (Turquoise), IFFBM (Brilliant Green), IFGM (Brilliant Blue), IRM (Blue), IRRM (Marine Blue), and IVM (Blue Black); Group 3: Phthalogen K, Phthalogen Ni, Phthalogen P, Phthalogen B, and Phthalogen FN; and Phthalogen Blue IBN, which is a derivative of trivalent cobalt phthalocyanine that produces a deep, greenish blue color (see, Table 1, wherein Phthalogen Blue IBN follows the metal DehydroPc complexes in Group 1 as No. 4).

Table 1.

The suffixes in Table 1 have the following meanings: I represents Indanthrene fastness of the dyes and prints; F and FF are rising brilliance of the color shades; G and GG, B and 2B, and R and RR indicate rising yellow, blue or red cast of the color shades, respectively; M represents mixtures of diiminoisoindolines with the metal donors Phthalogen K or Ni (Group 2a); K indicates that a preformed complex (i.e., a DehydroPc metal complex) is involved; and N is a new brand.

Table 1

Commercial Products of the Phthalogen Class

| Group | No. | Phthalogen | | Composition |
|---|---|---|---|---|
| | | | | (1) (2) (3) 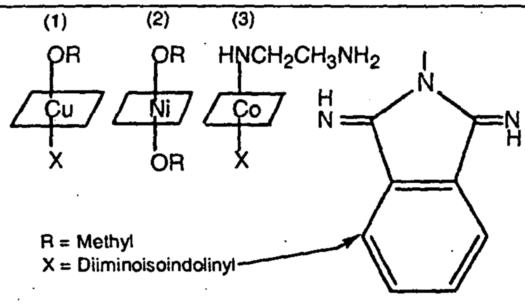  |
| | 1 | Brilliant Blue | IF3GK | |
| | 2 | Turquoise | IFBK | |
| 1 | 3 | Blue I | IB | |
| | 4 | Blue | IBN | |
| | 5 | Brilliant Blue | IF3G | (5) 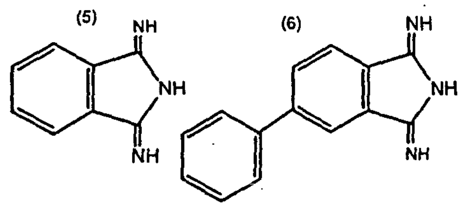 (6) |
| 2 | 6 | Brilliant Green | IFFB | (7) 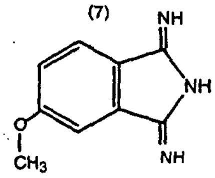 |
| | 7 | Brilliant Green | IF2B | |
| | 8 | Brilliant Blue | IF3GM | Base No. 5 + Phthalogen K |
| | 9 | Turquoise | IFBM | Base No. 5 + Phthalogen Ni |
| 2a | 10 | Brilliant Green | IFFBM | Base No. 6 + Phthalogen K |
| | 11 | Brilliant Green | IF2BM | Base No. 7 + Phthalogen K |
| | 12 | Brilliant Blue | IFGM | Mixtures of base No. 5 with dithia developer (XI and Phthalogen K or --for No. 15--with Phthalogen Ni |
| | 13 | Blue | IRM | |
| | 14 | Marine Blue | IRRM | |
| | 15 | Blue Black | IVM | |
| | 16 | Phthalogen K | } | Copper or nickel complex from hydroxyethyl sarcosine (LI), $R = CH_3$; |
| | 17 | Phthalogen Ni | | |
| 3 | 18 | Phthalogen P | | $R1 = CH_2 \cdot CH_2 \cdot OH$ |
| | 19 | Phthalotrop B | | |
| | 20 | Phthalofix FN | | |

Group 1 comprises metal complexes with a preformed DehydroPc ring. Group 2 comprises 1,3-diiminoisoindolines. Group 2a comprises 1,3-diiminoisoindolines that are substantially similar to Group 2, but are further homogenously mixed a developer such as a metal donor that is required for dye development in the form of Phthalogen K or Phthalogen Ni. Phthalogen precursors 12-15 (Table 1) include quantities of the dithia precursor 1,3-diimino-4,7-dithia-4,5,6,7-tetrahydroisoindolene, (13) with the following structure

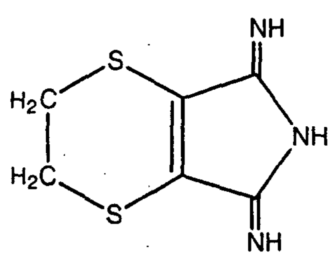

(13).

With regard to Group 3, Phthalogen K and Phthalogen Ni (14) are copper and nickel complexes of the following structure

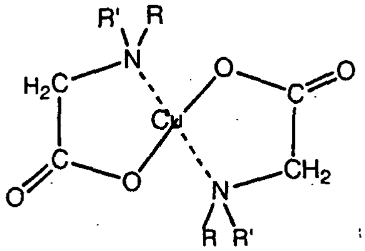

(14),

wherein R is a methyl group and R' is a β-hydroxy-ethyl group. Phthalogen K and Phthalogen Ni are, thus, N-substitution products of the of glycocoll copper (*i.e.*, structure (8) having R and R' being H). Other suitable compounds of structure (8) include compounds where R and R' are β-hydroxyethyl groups or carboxymethyl groups ($-CH_2-COOH$) which are accessible from nitrilotriacetic acid with copper salts. Phthalogen P may be a copper donor. Phthalotrop B may be a resisting agent which may be used for printing with Phthalogens of Groups 2 and 2a in a preprint process. Phthalofix FN is a pre-mordant that may be used in dyeing with Phthalogen Brilliant Blue IF3GK.

Other non-limiting examples of phthalocyanine precursors (e.g., coordinately hexavalent DehydroPc-metal complexes) include the production of the phthalocyanine precursor from: phthalonitrile or 1-substituted 3-iminoisindolenines with metal salts in solvents at temperatures under 100ºC; the conversion of metal phthalocyanines into DehydroPc complexes by suitable oxidizing agents such as halogens in alcohols or nitric acid at temperatures below 100ºC; and upon conversion of cobalt complexes into DehydroPc complexes, the interaction of phthalic anhydride in a molybdate-catalyzed urea melt with cobalt salts, optionally with the addition of nitrobenzene, at temperatures of about 170-220ºC. Another phthalocyanine precursor includes a CuPc developer comprising $C_{48}H_{25}N_{13}Cu$, which upon reduction, produces CuPc (15) having the following structure (such as described in R.A. Brooks, J.B. Burt, B.F. Skiles, and M.S. Whelen, *J. Org. Chem.* 24, 3 (1959)).

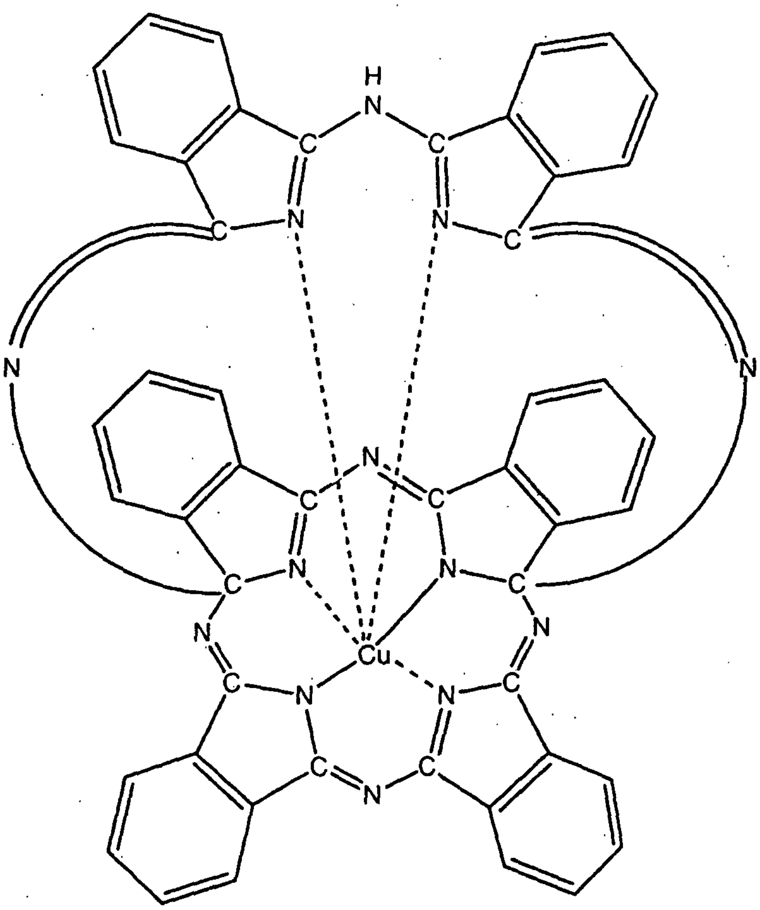

(15).

A colorant solution may be prepared by combining the reactive colorant (*e.g.*, the phthalocyanine precursor) with the radiation absorber in a liquid carrier, such as, for example, a solvent. The solvent may comprise a volatile, water-miscible solvent such as, for example, a levasol. The colorant solution may further include an emulsifier or thickening agent to aid the colorant solution being applied to the substrate.

In another embodiment, the liquid carrier may comprise a water-soluble organic solvent that may be used in conjunction with the metal phthalocyanines in order to develop the Phthalogens on the substrate. Suitable solvents include, without limitation, polyalcohols (which optionally may include trialkanolamines), diethylene glycol, triethylene glycol, formamide, and combinations thereof.

Depending on the type of phthalocyanine precursor used as the reactive colorant, an activator may further be added to the colorant solution. For instance, if phthalocyanine precursors of Group 2 (Table 1) are used, an optimum quantity of a copper salt, a nickel salt, a cobalt salt, or other complex salt may be added to the colorant solution as the activator.

An image may be formed on the substrate by applying the colorant solution, such as by soaking, the fabric. The substrate may be dried, and the substrate coated with the colorant solution is exposed to radiation in order to cause the phthalocyanine precursor to produce a color. The radiation may comprise a laser beam or beams that are patterned on the substrate to effectuate the image formation. Once the phthalocyanine precursor is converted to a dye (e.g., a phthalocyanine complex), the solubility of the dye changes relative to the reactive colorant and the dye adheres to the substrate. Any un-exposed phthalocyanine precursor, which has a different solubility than the adhered dye, may be removed from the substrate, such as by washing, and re-used on another substrate. The dye adhered to the substrate that forms the image may optionally be fixed to the substrate such as by exposure to heat.

The formation of different colors on the substrate may be effectuated by using the various phthalocyanine precursors of Table 1 in combination with a developer, where appropriate. Further, the radiation absorber may be selected and tuned to the desired phthalocyanine precursor, such that when the substrate is exposed to the appropriate radiation for the radiation absorber, a desired color is formed on the radiation.

In yet another embodiment, a phalogen color former may be combined with an amine complex of a transition metal (e.g., Cu, Ni or Co) as a developer. Non-limiting examples of on-fiber phthalogen compositions are commercially

available and include Brilliant Blue IF3GM, Turquoise IFBM, Brilliant Green IFFBM and IF2BM. Color reactions are induced by reduction or heat using the radiation absorbers described herein. Representative examples of some phalogen color formers are exemplified by the following reactions.

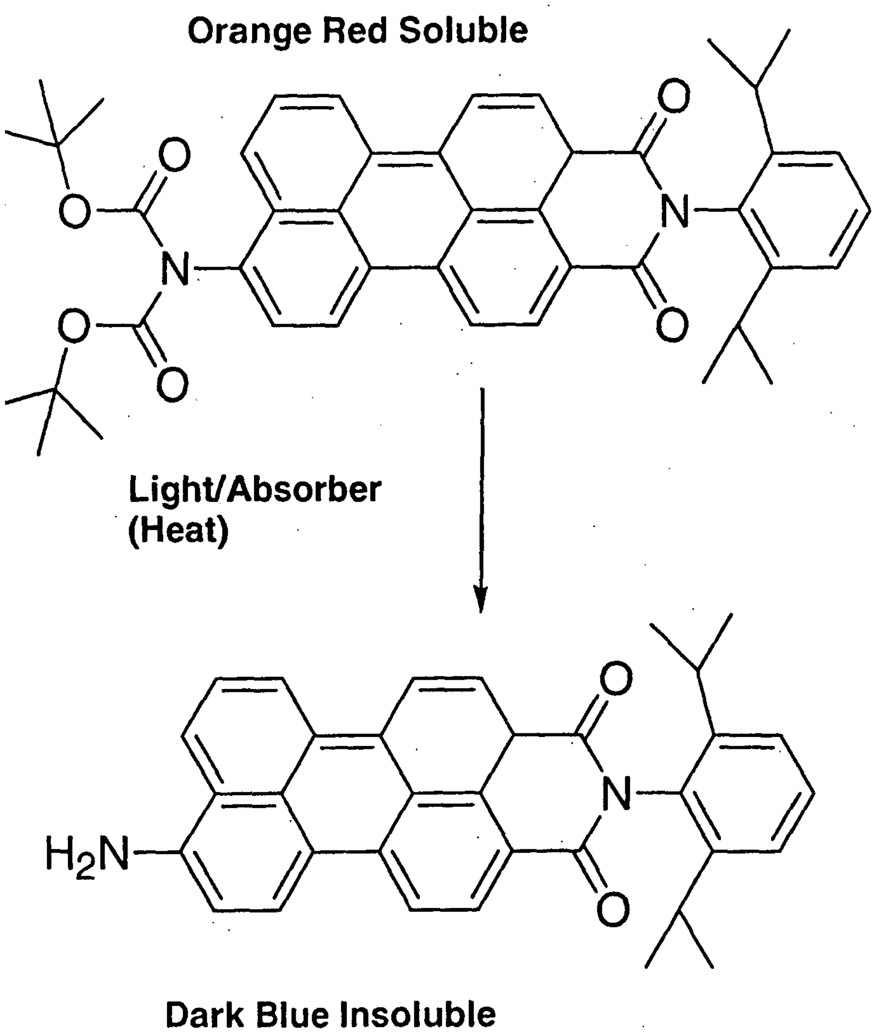


(16)

(17)

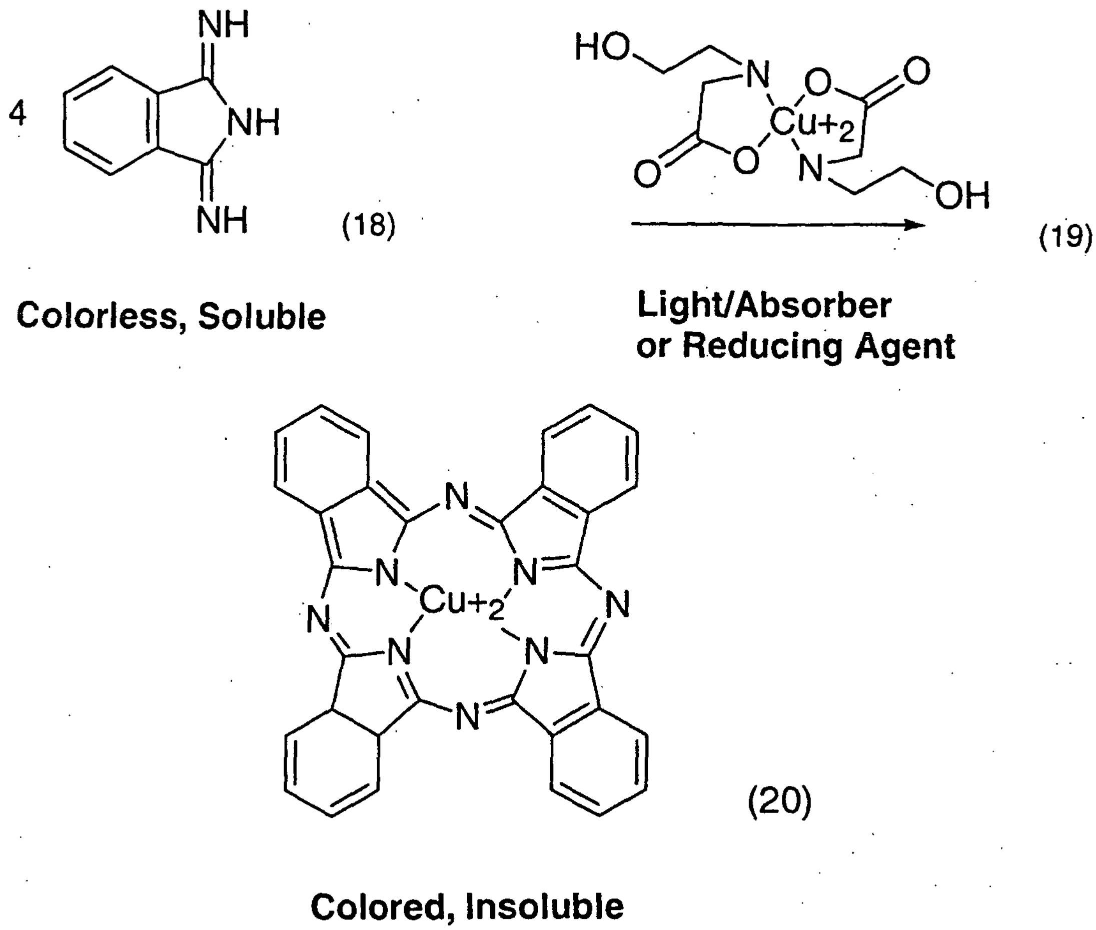


(18) (19) (20)

Example 2.

In another embodiment, the reactive colorant comprises a base having a cyclotetra-isoindolenine-(endo-isoindolenino)-cobalt complex or Phthalogene Blue IB along with at least one reducing agent capable of reducing the complex to a phthalocyanine pigment when used in combination with a radiation absorber and exposed to suitable radiation as described herein. In one embodiment, the reactive colorant may comprise a polyamine, the radiation absorber may comprise a ferric salt, and the reducing agent may comprise hydroquinone.

Polyamines which may be used in the complex include, for example, ethylene diamine, diethylene triamine, γ, γ-diaminopropylmethyl amine, 1-amino-3-dimethylaminopropane, 1-diethylamino-4-amino-n-pentane, hexamethylene diamine and γ, γ-diaminodipropyl ether. Ferric salts which may be used include, but are not limited to, ferric chloride, ferric oxalate, ferric ammonium oxalate, ferric ammonium citrate and ferric citrate. In other embodiments, a suitable amount of oxalic acid or ascorbic acid may be added to aid in the production of color. In yet another embodiment, the reactive colorant may comprise Phthalogene Blue IB.

Example 3.

In another embodiment, the reactive colorant may comprise an azo dyestuff having the general formula:

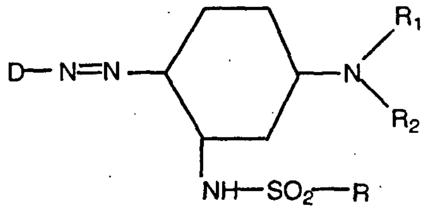

(21),

wherein D is a diazo component of the benzene series, R1 is an alkyl radical, R2 is alkylene, and R is an alkyl, aryl or di-substituted amino. The azo dyestuff is capable of dying a substrate comprising polyester fibers in red and blue shades with good fastness.

In a further embodiment, the azo dyestuff has the following formula

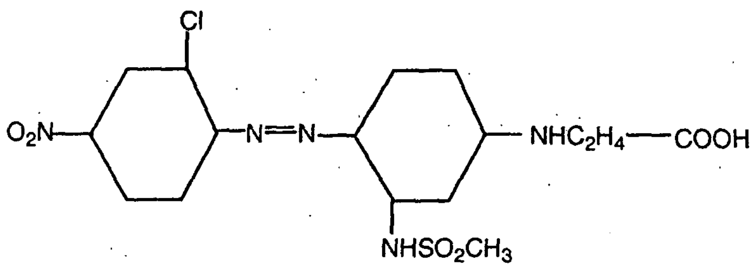

(22),

and is capable of producing red shades on a substrate.

In another embodiment, the azo dyestuff of the following formula

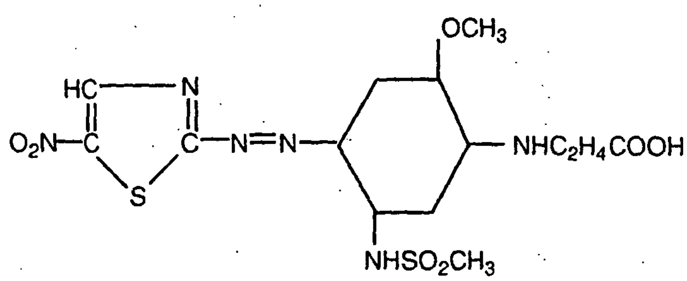

(23)

may be used to dye the substrate in blue shades.

In an additional embodiment, the azo dyestuff of the following formula

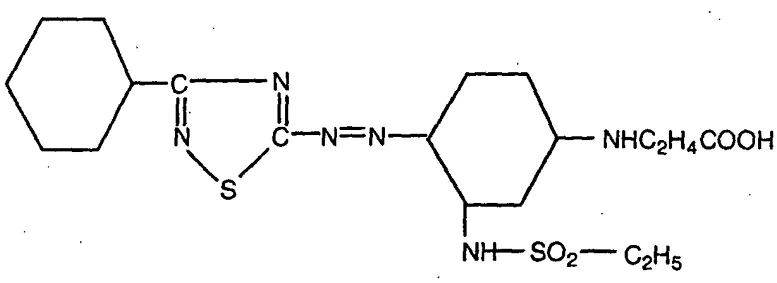

(24)

may be used to dye the substrate a red shade.

Other azo dyes that may be used as the reactive colorant correspond to the formula D-N=N-C, wherein D

represents radicals having the following structures (25-33), respectively,

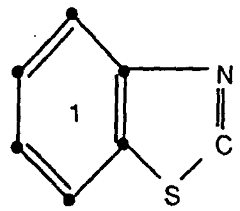

(25),

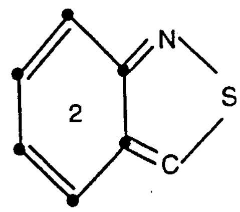

(26),

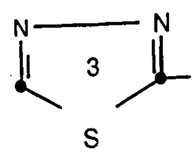

(27),

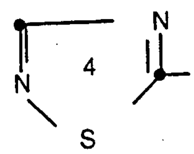

(28),

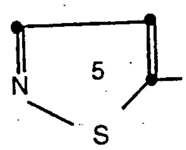

(29),

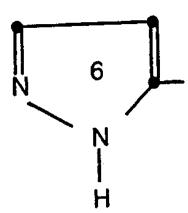

(30),

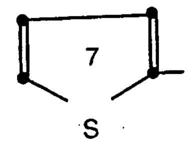

(31),

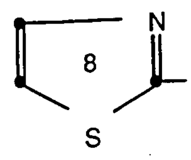

(32), and

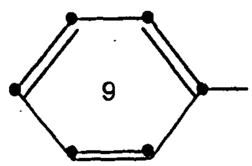

(33);

wherein ring 1 may have 1-3 substituents selected from alkyl, alkoxy, thiocyano, alkylthio, cyano, carbamoyl, alkylcarbamoyl, alkoxycarbonyl, acyl, alkylsunfonyl, sulfamoyl, $SO_2NH$(alkyl), $SO_2N$(dialkyl), alkylsulfonamido, acylamido, halogen, trifluoromethyl, and $SO_3$(aryl).

Ring 2 may have 1-3 substituents selected from alkyl, alkoxy, chlorine, bromine, $SO_2NH_2$, $SO_2NH$(alkyl), and $SO_2N$(dialkyl).

Ring 3 may have a substituent selected from alkyl, alkoxy, halogen, alkylsulfonyl, SO2NH2, $SO_2NH$(alkyl), $SO_2N$(dialkyl), arylsulfonyl, acylamido, aryl, arylthio, alkenythio, cyclohexylthio, thiocyano, cyclohexylsulfonyl, alkylthio, and cyclohexyl.

Ring 4 may have a substituent selected from alkyl, aryl, halogen, alkylthio, cyclohexylthio, and alkylsulfonyl.

Ring 5 may have 1 or 2 substituents selected from alkyl, halogen, cyano, carbamoyl, CONG-alkyl, alkoxycarbonyl, alkylthio, alkenylthio, arylthio, cyclohexylthio, s-heterocycle, aryloxy, and alkoxy.

Ring 6 may have 1 or 2 substituents selected from alkyl, alkoxycarbonyl, alkylthio aryl, cyano, carbamoyl, alkylcarbamoyl, and alkylsulfonyl, and the hydrogen on the N may be replaced with alkyl, aryl or 6-10 carbons, alkylsulfonyl, arylsulfonyl, alkanoyl, or alkoxycarbonyl.

Ring 7 may be substituted with 1-3 groups selected from alkyl, cyano, alkoxycarbonyl, acyl, alkylsulfonyl, arylsulfonyl, carbamoyl, alkylcarbamoyl, aryl, halogen, sulfamoyl, alkylsulfamoyl, and formyl.

Ring 8 may have 1 or 2 substituents selected from alkyl, aryl, alkoxycarbonyl, carbonyl, CONH-alkyl, CON $(alkyl)_2$, halogen, cyano, thiocyano, alkyl-thio, alkylsulfonyl, arylsulfonyl, formyl, acyl, and aroyl.

Ring 9 may have 1-3 substituents independently selected from alkyl, alkoxy, thiocyano, cyano, nitro, alkylthio, arylazo, arylthio, aroyl, carbamoyl, alkylcarbamoyl, alkanoyl, alkylsulfonyl, arylsulfonyl, sulfamoyl, $SO_2NH$(alkyl), $SO_2N$ (dialkyl), alkylsulfonamido, alkanoylamino, halogen, trifluoromethyl, and SO3(aryl).

C in D-N=N-C is a coupler selected from the following structures (34-43), respectively,

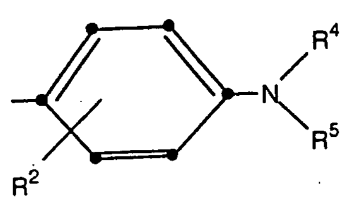

(34),

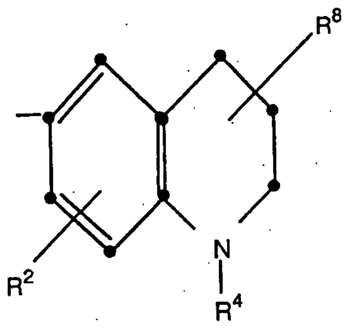

(35),

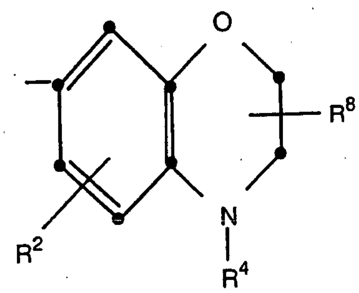

(36),

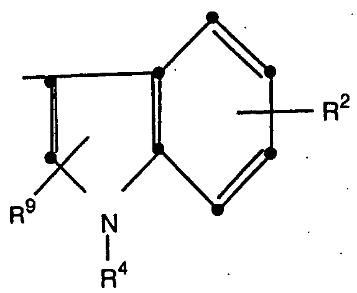

(37),

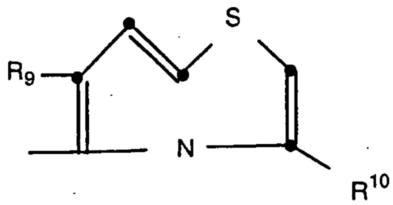

(38),

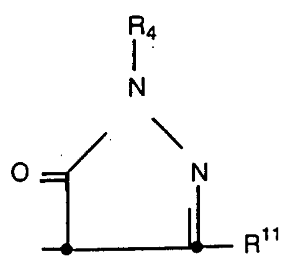

(39),

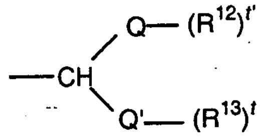

(40),

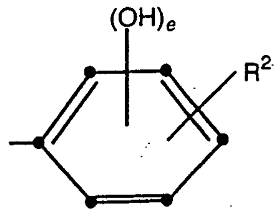

(41),

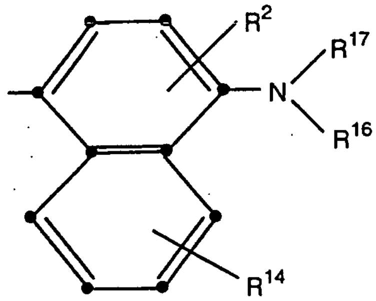

(42), and

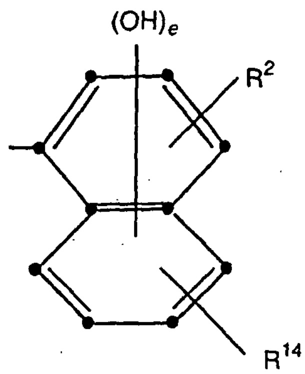

(43);

wherein $R^2$ and $R^{14}$ each represent up to three groups selected from hydrogen, fluorine, chlorine, bromine, alkyl, cycloalkyl, alkoxy, phenoxy, aklylthio, arylthio, and radicals having the formula -NH-X-$R^3$ in which X is -CO-, -COO-, or -$SO_2$-and $R^3$ is selected from alkyl and alkyl substituted with halogen, hydroxyl, phenoxy, aryl, cyano, cycloalkyl, alkylsulfonyl, alkylthio, alkanoyloxy, and alkoxy, and when X is -CO-, $R^3$ is selected from hydrogen, amino, alkylamino, dialkylamino, arylamino, aryl, and furyl.

$R^4$ and $R^5$ are each selected from hydrogen, alkyl, aryl, cycloalkyl, and alkyl substituted with halogen, CN, OH, alkoxy, aryloxy, alkoxyalkoxy, alkanoyl, alkanoyloxy, carbamoyl, alkylcarbamoyl, sulfamoyl, alkylsulfamoyl, alkoxyalkanoyloxy, and cycloalkyl, and $R^4$ and $R^5$ together represent a single, combined group -$CH_2CH_2CH_2CH_2CH_2$-, -$CH_2CH_2OCH_2CH_2$-, -$CH_2CH_2$-S-$CH_2CH_2$-, or -$CH_2C$-$H_2$-$SO_2$-$CH_2CH_2$-.

$R^8$ may be one or two groups, each selected from hydrogen, alkyl and alkyl substituted with -CN, alkoxy, alkoxycarbonyl, alkoxycarbonyloxy, phenyl, cyclohexoxy, -OH, -Cl and Br.

$R^9$, $R^{10}$ and $R^{11}$ may each be selected from hydrogen, alkyl, phenyl, or phenyl substituted with 1-3 groups selected from Cl, Br, alkyl or alkoxy, alkythio, benzylthio, cyclohexylthio and phenylthio.

Q and Q' may each be selected from -CO-, $-SO_2-$, or -CN. $R^{12}$ and $R^{13}$ may each be selected from alkyl, hydroxyalkyl, alkoxy, alkoxycarbonylamino, trifluoromethyl, phenyl or phenyl substituted with 1-3 groups selected from Cl, Br, alkyl or alkoxy, alkoxycarbonylalkyl, cyanoalkyl, amino, haloalkyl, alkylamino, alkylthio, benzylthio, cyclohexylthio and phenylthio; and $R^{12}$ and $R^{13}$ together may comprise $-CH_2C(CH_3)_2CH_2-$, or 1,2-$C_6H_4$-connecting Q and Q'.

$R^{16}$ and $R^{17}$ are selected from hydrogen, cycloalkyl, aryl, alkyl, and alkyl substituted with alkoxy, hydroxyl, alkoxyalkoxy, hydroxyalkoxy, carbamoyl, sulfamoyl, alkanoylamino, or alkenylsulfonyl, and aryl substituted with hydroxyalkyl.

In the structures, e may be 1 or 2, and t and t' may each be 1 or zero.

Further, each of the above alkyl, alkanoyl, alkylene, and alkoxy moieties may be substituted with one to three of the following: hydroxy; halogen; cyano; succinimido; glutarimido; phthalimido; 2-pyrrolidono; cyclohexyl; phenyl; phenyl substituted with alkyl, alkoxy, halogen, alkanoylamino, cyano or alkoxycarbonyl; alkanoylamino; sulfamoyl; alkylsulfamoyl; vivylsulfonyl; acrylamido; phthalimidinyl; benzoylsulfonicimidyl; alkylsulfonamido; phenylsulfonamido; alkoxycarbonylamino; alkylcarbamoyloxy; alkoxycarbonyl; alkoxycarbonyloxy; structure (44)

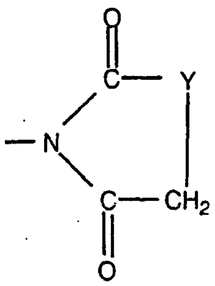

(44)

wherein Y is -NH-, -NH-alkyl-, -O-, -S-, or $-CH_2O-$, $-S-R^6$, wherein $R^6$ is alkyl, phenyl, phenyl substituted with halogen, alkyl, alkoxy, alkanoylamino, cyano, or alkoxycarbonyl, pyridyl, pyrimidinyl, benzoxazolyl, benzimidazolyl, benzothiazolyl; structure (45),

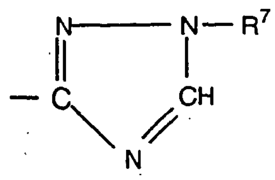

(45)

$-OXR^3$, $-NH-X-R^3$, $-X-R^3$, $-SO_2NR^7R^7$, wherein $R^3$ and X are as previously described herein and $R^7$ is selected from H and $R^3$, alkoxy, alkoxy substituted with hydroxyl, cyano, alkanoyloxy, or alkoxy; phenoxy; or phenoxy substituted with one or more of alkyl, alkoxy or halogen, and wherein the alkyl, alkylene, alkoxy, alkanoyl, and such hydrocarbon moieties of the diazo components and the couplers are straight or branched and contain from 1-6 carbons.

Example 4.

In an additional embodiment, the reactive colorant may be combined with a radiation absorber and a reducing agent progenitor as the developer. In this embodiment, the reducing agent progenitor is activated by a stimulus such as, for example, heat.

In this embodiment, the reactive colorant undergoes an oxidative condensation reaction in the presence of the reducing agent in order to produce an azomethine or indoanilene dye. Non-limiting examples of reactive colorants of this embodiment include: aminotriarylmethanes; aminoxanthenes; aminothioxanthenes; amino-9,10-dihydroacridines; aminophenoxazines; aminophenothiazines; aminodihydrophenazines; aminodiphenylmethanes; aminohydrocinnamic acids (cyanoethanes); leucoindigoid dyes; and 1,4-diamino-2,3-dihydroanthraquinones. Other reactive colorants that are capable of undergoing the oxidative condensation reaction include acyl derivatives of leuco dyes having a basic NH group such as, for example, dihydrophenazines, phenothiazines, and phenoxazines.

In another embodiment, the reactive colorant may comprise organic amines including 4,4'-ethylenedianiline, diphenylamine, N,N-dimethylaniline, 4,4'-methylenedianiline, triphenylamine, and N-vinylcarbazole.

In a further embodiment, the reactive colorant may comprise a hydrazone or an acyl derivative of the hydrazone which may be oxidized to a diazonium compound. The diazonium compound may be further coupled to a coupling agent capable of producing an azo dye. The coupling agent may comprise N,N-diethylaniline, N,N-dimethyl-m-toluidine, N-(2-cyanoethyl)-N -methyl-2-napthylamine, and active methylene compounds such as acetoacetamide, 2-thenoylacetonitrile, and phenolic compounds such as m-cresol, 2-naphthol, 6-sulfamido-1-naphthol and hydroquinone.

Other non-limiting examples of reactive colorants include 3-methyl-2-benzothiazolinone hydrazone; 6-chloro-3-methyl-2 -benzothiazolinone hydrazone; and 6-methoxy-3-methyl-2-benzothiazolinone hydrazone. Non-acylated hydrazones that may be used include: 3-methyl-2-benzothiazolinone acetylhydrazone; 3-methyl-2-benzothiazolinone p-tolylsulfonylhydrazone; 3-methyl-2-benzoselenazolinone propionylhydrazone; 3-ethyl-2benzoxazolinone phenylsulfonylhydrazone; 5-methoxy-1,3-dimethyl-2 -benzimidazolinone benzoylhydrazone; and 1-methylcarbostyril phenoxyacetylhydrazone.

In another embodiment, the reactive colorant may comprise a composite hydrazone-coupler compound that includes the diazo component and the coupler compound. Non-limiting examples of such compounds include 3-methyl-2-benzothiazolinone 1-hydroxy-2-naphthoylhydrazone and 3-methyl-2-benzothiazolinone 5-oxo-1-phenyl-3-pyrazolylcarbonylhydrazone.

In an additional embodiment, the reactive colorant may comprise an aromatic diamine (e.g., N,N-dialkylphenylenediamine) combined with a coupling agent (e.g., active methylene, anilines or phenolic compounds) in order to produce an azomethine or an indoaniline dye.

In order to effectuate color formation, the reactive colorant, the reducing agent progenitor and the radiation absorber are applied to the substrate. Exposure of the substrate to radiation, such as the laser, causes the radiation absorber to absorb the radiation and produce heat, thus, causing the reducing agent progenitor to become active a reducing agent.

In one embodiment, the reducing agent is a hydroquinone or a substituted hydroquinone. Non-limiting examples of substituted hydroquinones include phenylhydroquinone, t-butylhydroquinone and durohydroquinone. In another embodiment, the hydroquinone may be partially etherified, as in the case of p-benzyloxyphenol. Other hydroquinones that may be used include naphthalene-1 ,4-diol, resorcinol and pyrogallol.

In other embodiments, the reducing agent may comprise a phenolic compound such as 2,4,6-trimethylphenol, 2,6,di-tert-butyl-p-cresol or 2,4,6-trimethylphenol. Other compounds that may be used for reducing agents include: hydroxylamines, such as N,N-dimethylhydroxylamine and N,N,-dibutyl-hydroxylamine; oxidizable hydroxyl acids, such as tartaric acid; suitable nitrogen-containing compounds, such as semicarbazide, hydrazine and phenylhydrazine; and amines, such as aniline.

In yet other embodiments, the production of the active reducing agent may occur in situ on the substrate via one of three different reactions. In one embodiment, a reducing agent is formed by a solvolytic reaction wherein the reducing agent is formed after mild heating. Non-limiting examples of solvolytic reactions include: acetals exemplified by the following reaction including p-bis(2-tetrahydropyranyloxy) benzene:

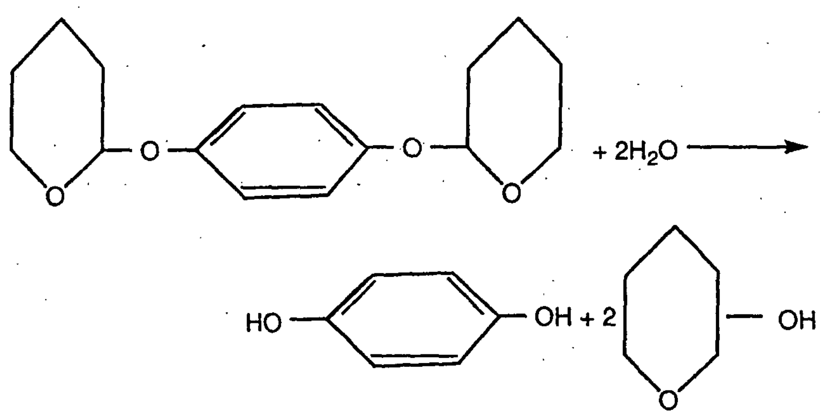

(46),

orthoesters exemplified by the following reaction including tris(p-methoxyphenyl) ester of orthoformic acid:

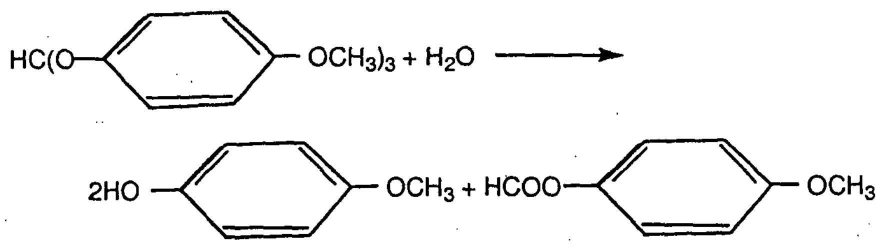

(47),

orthocarbonates exemplified by the following reaction including tetrakis-(p-methoxyphenyl) ester of orthocarbonic acid:

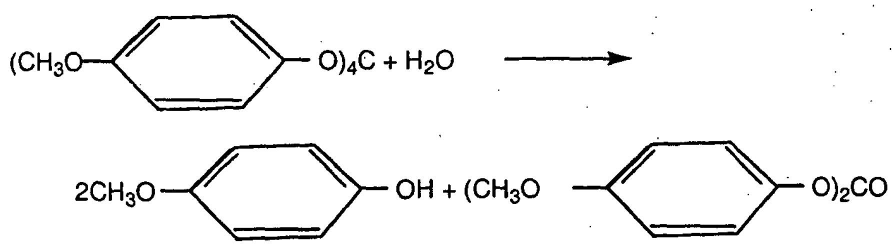

(48),

carbonates exemplified by the following reaction including o-phenylene carbonate:

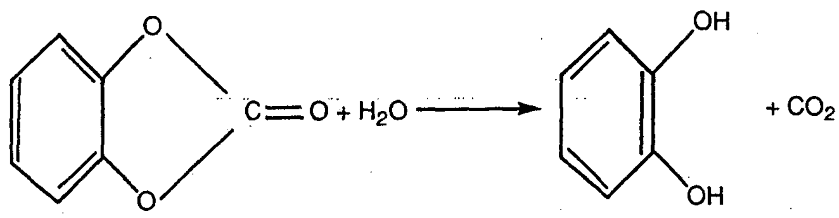

(49),

semicarbazones exemplified by the following reaction including ethyl methyl ketone semicarbazone; and

$$C_2H_5(CH_3)C{=}N\text{-}NHCONH_2 + H_20 \rightarrow NH_2NHCONH_2 + C_2H_5COCH_3;$$

and
Schiff's bases exemplified by the following reaction including N-benzylidineaniline:

$$C_6H_5CH{+}NC_6H_5 + H_20 \rightarrow C_6H_5NH_2 + C_6H_5CHO.$$

Other compounds that will produce a reducing agent upon hydrolysis include a resin obtained from formalaniline and formaldehyde, and an acetal-ester derivative of tartaric acid having the structure

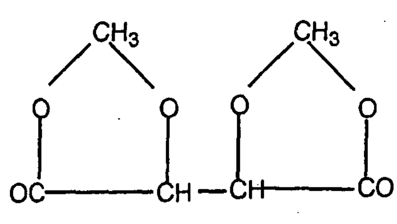

(50).

In another embodiment, rearrangement reactions involving the tautomeric shift of hydrogen and that are acid-catalyzed include the following non-limiting examples:

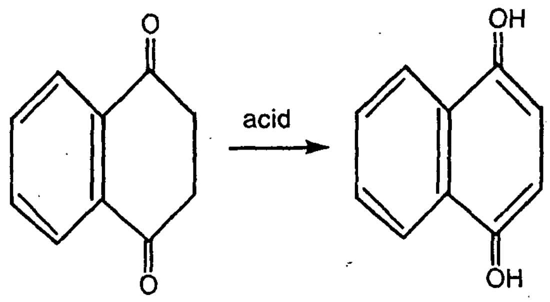


2, 3-dihydro-1, 4-napthoquinone

1, 4-napthalenediol

(51); and

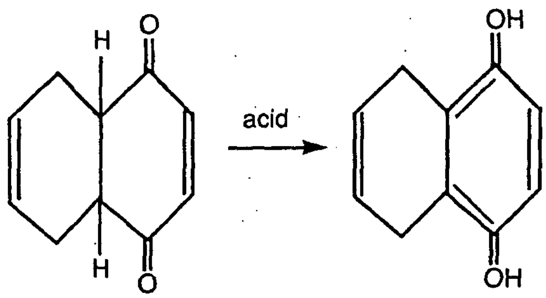


4a, 5, 8, 8a-tetrahydro-1, 4-napthaquinone

5, 8-dihydro-1, 4-napthalenediol

(52).

In an additional embodiment, an elimination reaction may be used to produce the reducing agent as exemplified by the following reaction including hydroquinone-bis-(dihydropyran)

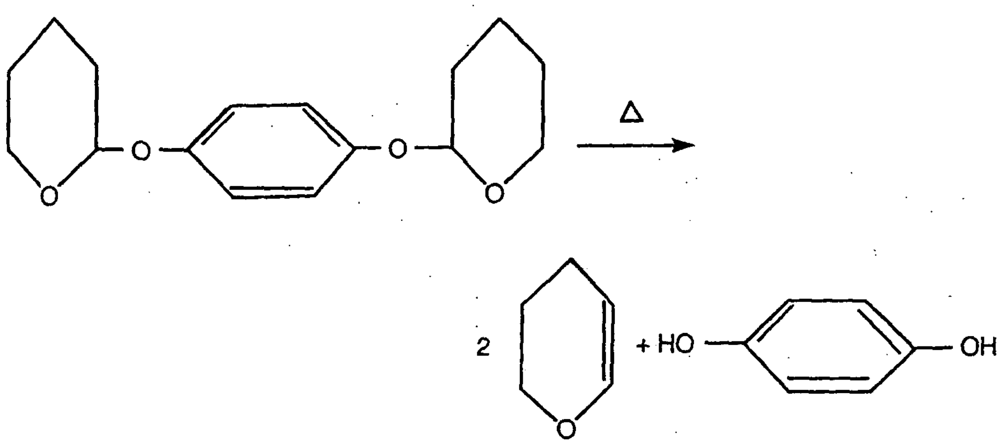


(53).

Example 5.

In a further embodiment, the reactive colorant combined with the radiation absorber in the colorant solution

may comprise a color change dye. In one embodiment, the color change dye may comprise a thermotropic dye, that, when reacted with heat produced by the radiation absorber upon exposure to radiation eliminates a portion of the structure of the thermotropic dye and effectuates a color change. A non-limiting example of a thermotropic dye includes an alkoxycarbonylated dye which comprises an amino substituted perylendicarboximide that, upon exposure to heat, has a $CO_2$ isobutylene portion of the molecule removed.

In this embodiment, the thermotropic dye possesses a photostable primary color and, when exposed to heat, the thermotropic dye undergoes an irreversible change to a photostable secondary color. In one embodiment, the color change of the reactive colorant is obtained by using a thermally unstable alkoxycarbonyl substituent as a masking group in combination with a strong electron-donating primary amino group attached to a perylenedicarboximide chromophore. Upon exposure of a colorant solution comprising the radiation absorber and the alkoxycarbonylated dye, a parent primary amino-functionalized dye is regenerated by the elimination of an alkene and a carbon dioxide from the alkoxycarbonylated dye, thus producing the color change.

Example 6.

In a further embodiment, a fabric coated with a colorant solution comprising a reactive dye capable of forming an image or color, as described herein, is produced and sold. The fabric, as sold, is ready for subsequent marking by a consumer or a store. In one embodiment, the fabric (e.g., a T-shirt having a colorant solution dried thereon) may be produced at a location and distributed to stores or consumers. The stores or consumers may use a digitally addressable energy source and expose the pre-soaked T-shirt to the energy source to produce images as described herein. In this manner, each T-shirt may be customized to have a design printed thereon since the digitally addressable system may be used to convert any image into laser light and transferred onto the T-shirt. Other fabrics that may be sold "ready to image" include, but are not limited to team shirts, cloth school bags, jeans, hair bands, purses, or any other substrate or fabric capable of receiving the colorant solution of the present invention.

In one embodiment, a method of producing an image on the fabric includes soaking the fabric with the colorant solution, drying the colorant solution on the fabric, selling the fabric, forming an image on the fabric by exposing the soaked fabric to the radiation, washing un-exposed colorant solution from the fabric, and optionally fixing the resulting dye to the fabric.

Example 7.

In yet another additional embodiment, a colorant solution of the present invention may include a combination of reactive colorants from any of the above-referenced Examples in order to produce multiple colors on a substrate. For instance, a colorant solution may include a first reactive colorant from Example 1 and a second reactive colorant from Example 3, wherein the first and second reactive colorants may be caused to form different colors on the substrate at different wavelengths of radiation. In this manner, more than one color may be imparted onto the substrate using the same colorant solution and exposure of the colorant solution of the substrate to different wavelengths of radiation.

Although the present invention has been shown and described with respect to various exemplary embodiments, various additions, deletions, and modifications that are obvious to a person of ordinary skill in the art to which the invention pertains, even if not shown or specifically described herein, are deemed to lie within the scope of the invention as encompassed by the following claims. Further, features or elements of the different embodiments may be employed in combination.

## Claims

**1.** A method of forming an image on a substrate, the method comprising:

applying a colorant solution to a substrate, the colorant solution comprising a reactive colorant and a radiation absorber; and

exposing at least a portion of the colorant solution of the substrate to radiation, thus causing the reactive colorant to form a visible dye.

**2.** The method according to claim 1, further comprising removing un-exposed portions of the colorant solution from the substrate.

**3.** The method according to claim 1 or claim 2, further comprising re-using the un-exposed portions of the colorant solution.

**4.** The method according to any one of claims 1 through 3, further comprising drying the colorant solution on the substrate.

**5.** The method according to any one of claims 1 through 4, further comprising fixing the visible dye to the substrate.

**6.** A composition for dying a substrate, comprising:

a radiation absorber; and
a reactive colorant capable of producing a color on the substrate when exposed to radiation.

**7.** A system for forming an image on a substrate, comprising:

a substrate for receiving the image;
a colorant solution comprising a reactive colorant and a radiation absorber; and
a source of radiation.

**8.** The method, composition or system according to any one of claims 1 through 7, wherein the reactive colorant is selected from the group consisting of a phthalocyanine precursor, a cyclotetra-isoindolenine-(endo -isoindolenino)-cobalt complex, an azo dyestuff, an azomethine dye, an indoanilene dye, an organic amine, an hydrazone, an acyl derivative of a hydrazone, a hydrazone-coupler compound, an aromatic diamine, and combinations thereof.

**9.** The method, composition or system according to any one of claims 1 through 8, wherein the radiation absorber is selected from the group consisting of polymethine dyes, polymethyl indolium dyes, metal complex infrared dyes, indocyanine green, heterocyclic compounds, IR780, IR 783, Syntec 9/1, Syntec 9/3, a dithiolane metal complex, an indoaniline metal complex, and combinations thereof.

**10.** The method, composition or system according to any one of claims 1 through 9, wherein the substrate is selected from the group consisting of fabric, fibers, an optical disc, a polymeric surface, glass, ceramic, cellulose papers, plastic, acrylates, and combinations thereof.

European Patent Office

# EUROPEAN SEARCH REPORT

Application Number
EP 05 01 0663

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y<br><br>X | US 5 786 132 A (NOHR ET AL)<br>28 July 1998 (1998-07-28)<br>* abstract *<br>----- | 1-10<br><br>6 | C09B67/00<br>B41M5/26<br>D06P1/00 |
| Y | EP 0 654 711 A (CIBA SPECIALTY CHEMICALS HOLDING INC) 24 May 1995 (1995-05-24)<br>* abstract *<br>* page 36, line 31 *<br>----- | 1-10 | |
| P,Y | EP 1 508 440 A (FUJI PHOTO FILM CO., LTD)<br>23 February 2005 (2005-02-23)<br>* the whole document *<br>----- | 1-10 | |
| Y | EP 1 393 899 A (FUJI PHOTO FILM CO., LTD)<br>3 March 2004 (2004-03-03)<br>* abstract *<br>* paragraph [0047] - paragraph [0054] *<br>----- | 1-10 | |
| Y | EP 0 646 912 A (NIPPON PAPER INDUSTRIES CO., LTD) 5 April 1995 (1995-04-05)<br>* abstract *<br>* page 13, line 49 - line 51 *<br>----- | 1-10 | TECHNICAL FIELDS SEARCHED (Int.Cl.7)<br>C09B<br>B41M<br>D06P |

The present search report has been drawn up for all claims

1

| Place of search | Date of completion of the search | Examiner |
|---|---|---|
| The Hague | 9 September 2005 | Dauksch, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 01 0663

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2005

| Patent document cited in search report | Publication date | Patent family member(s) | Publication date |
|---|---|---|---|
| US 5786132 A | 28-07-1998 | AT 195815 T | 15-09-2000 |
| | | AU 6378696 A | 24-12-1996 |
| | | BR 9608367 A | 18-08-1998 |
| | | CA 2219450 A1 | 12-12-1996 |
| | | DE 69609967 D1 | 28-09-2000 |
| | | DE 69609967 T2 | 12-04-2001 |
| | | EP 0830638 A1 | 25-03-1998 |
| | | ES 2148776 T3 | 16-10-2000 |
| | | JP 2001515524 T | 18-09-2001 |
| | | PL 323727 A1 | 14-04-1998 |
| | | RU 2170943 C2 | 20-07-2001 |
| | | SK 160497 A3 | 03-06-1998 |
| | | WO 9639646 A1 | 12-12-1996 |
| | | US 6063551 A | 16-05-2000 |
| | | US 5837429 A | 17-11-1998 |
| | | ZA 9604667 A | 07-01-1997 |
| EP 0654711 A | 24-05-1995 | EP 0654711 A1 | 24-05-1995 |
| | | CA 2135657 A1 | 23-05-1995 |
| | | DE 69418826 D1 | 08-07-1999 |
| | | DE 69418826 T2 | 21-10-1999 |
| | | JP 3510927 B2 | 29-03-2004 |
| | | JP 8006242 A | 12-01-1996 |
| | | US 6040108 A | 21-03-2000 |
| | | US 5879855 A | 09-03-1999 |
| | | US 6180315 B1 | 30-01-2001 |
| EP 1508440 A | 23-02-2005 | JP 2005067006 A | 17-03-2005 |
| | | EP 1508440 A2 | 23-02-2005 |
| | | US 2005039620 A1 | 24-02-2005 |
| EP 1393899 A | 03-03-2004 | EP 1393899 A2 | 03-03-2004 |
| | | JP 2004106544 A | 08-04-2004 |
| | | US 2004048191 A1 | 11-03-2004 |
| EP 0646912 A | 05-04-1995 | CA 2133625 A1 | 06-04-1995 |
| | | DE 69420655 D1 | 21-10-1999 |
| | | DE 69420655 T2 | 08-06-2000 |
| | | EP 0646912 A2 | 05-04-1995 |
| | | JP 7149056 A | 13-06-1995 |
| | | US 5707778 A | 13-01-1998 |

EPO FORM P0459

For more details about this annex : see Official Journal of the European Patent Office, No. 12/82